# EUROPEAN PATENT SPECIFICATION

(11) **EP 2 786 943 B1**
(45) Date of publication and mention of the grant of the patent: **03.05.2017**
(21) Application number: 14159268.3
(22) Date of filing: 12.03.2014
(51) Int. Cl.: B65D 81/113, B29C 44/12

(54) **Packing buffer and manufacturing method thereof**
Verpackungspuffer und Herstellungsverfahren dafür
Tampon d'emballage et son procédé de fabrication

(30) Priority: 01.04.2013 KR 20130035101
(43) Date of publication of application: 08.10.2014
(73) Proprietor: Samsung Electronics Co., Ltd., Suwon-si, Gyeonggi-do 16677 (KR); M Korea Co., Ltd., Gyeonggi-do (KR)
(72) Inventor: Moon, Eun Ho, Gyeonggi-do (KR); Kim, Suk Hwan, Gyeonggi-do (KR); Lee, Dong Hun, Seoul (KR); Jeong, Heon Kwon, Incheon-City (KR)
(74) Representative: Walaski, Jan Filip

(56) References cited:
- DE-B- 1 247 609
- FR-A5- 2 177 274
- US-A- 3 705 222
- US-A- 3 759 644
- US-A- 4 240 557

## Description

The present invention relates to a packing buffer having enhanced manufacture efficiency, high strength, and eco-friendly properties, and a manufacturing method thereof.

In general, a finished electronic product, such as a TV or a refrigerator, is stored and transported in a packed state. In this case, to prevent the electronic product from being damaged by external shock, etc., the electronic product is transported in a state in which the entire surface of the electronic product is wrapped by a packing buffer.

Conventionally, a packing buffer has been mainly formed of expanded poly styrene (EPS). EPS may be prepared by mixing polystyrene with a foaming agent, such as propane, butane, pentane, etc. Such EPS is expandable to 20∼70 times initial volume when injected, in a pre-formed or pre-foamed state, into a mold and then heated, which ensures acquisition of a lightweight and strong molded foam product. An EPS packing buffer, thus, has a lightweight and high-strength and has been frequently used as a packing buffer for a variety of electronic products.

The EPS packing buffer may be molded in a plate shape or a shape corresponding to a product to be packed, and may be used alone or along with a reinforcement material. In particular, in the case in which the packing buffer is located below a bulky and heavy electronic product, such as a TV or a refrigerator, the packing buffer may fail to function when damaged or deformed by the weight of the product. For this reason, a reinforcement material has conventionally been mounted to the packing buffer for increase in strength.

To manufacture a conventional packing buffer, after polystyrene is molded into a packing buffer, a reinforcement material is additionally attached for increase in strength. More specifically, once the polystyrene packing buffer is completed via injection molding, the reinforcement material is attached to a lateral surface or bottom surface of the packing buffer for increase in strength. Attachment of the reinforcement material has been implemented using an adhesive member, such as a tape, etc. In the above-described case, an additional process of attaching the reinforcement material to the polystyrene molded article may be necessary, which may complicate manufacture of the packing buffer and deteriorate manufacture efficiency. In addition, installation of a plurality of reinforcement materials or adhesive members formed of different materials from the packing buffer may deteriorate recycling efficiency of the packing buffer.

In the conventional packing buffer, a reinforcement sheet may be disposed on a polystyrene molded article and heated to be fused thereto by a separate device. Fusing the reinforcement sheet may require an expensive molding machine, which results in increased manufacturing costs of the packing buffer. In addition, since the reinforcement sheet is fused at high temperature, quality failures of the packing buffer, such as, for example, deformation of the packing buffer and fusing defects at a lateral surface of the packing buffer, may frequency occur, or it may be necessary to cut the reinforcement sheet remaining at the lateral surface of the packing buffer after fusing.

US4240557 relates to a foam merchandise support. DE1247609 and US3759644 relate to manufacturing packing buffers.

Therefore, it is an aspect to provide a packing buffer having increased strength via efficient manufacture without increase in manufacturing costs, and a manufacturing method thereof.

It is another aspect to provide an eco-friendly and high-quality packing buffer formed of a single material, and a manufacturing method thereof.

Additional aspects will be set forth in part in the description which follows and, in part, will be obvious from the description, or may be learned by practice of the invention.

According to an aspect of the present invention, there is provided a method of manufacturing a packing buffer according to claim 1. Optional features are set out in the dependent claims.

In accordance with one aspect, a packing buffer to protect a packed article from external shock, includes a reinforcement sheet provided at the exterior of the packing buffer for increase in strength of the packing buffer, and injection molding of the packing buffer is implemented in a state in which the reinforcement sheet is inserted in a mold.

The reinforcement sheet may be formed of the same material as the packing buffer and is subjected to insert injection molding.

The reinforcement sheet and the packing buffer may be formed of polystyrene. The packing buffer may be provided at an outer surface thereof with recesses.

The recesses may be indented in the surface where the reinforcement sheet is formed.

The packing buffer may have a rounded corner.

The reinforcement sheet may be located at a lower surface and a lateral surface of the packing buffer.

A lateral surface of the packing buffer may have a gradient.

In accordance with one aspect, a method of manufacturing a packing buffer includes seating a reinforcement sheet in a cavity defined within a cavity mold frame, coupling a core mold frame and the cavity mold frame to each other, injecting a material of the packing buffer into the cavity, applying heat and pressure to the cavity, cooling the cavity, and releasing the packing buffer integrally injection-molded with the reinforcement sheet.

The method may further include fixing the reinforcement sheet seated in the cavity using a vacuum device connected to an absorption hole formed in the cavity mold frame.

The same material as that of the reinforcement sheet may be injected into the cavity.

Polypropylene may be injected into the cavity.

The material of the packing buffer may be injected into the cavity after the cavity mold frame and the core mold frame are temporarily coupled to each other, and the cavity mold frame and the core mold frame may be completely coupled to each other after the material of the packing buffer is charged into the cavity.

These and/or other aspects will become apparent and more readily appreciated from the following description of the embodiments, taken in conjunction with the accompanying drawings of which:
FIG. 1 is a perspective view showing a packing buffer according to one embodiment;
FIG. 2 is a partial side view of the packing buffer according to the embodiment;
FIG. 3 is a bottom view of the packing buffer according to the embodiment;
FIGS. 4 to 10 are views showing a method of manufacturing a packing buffer according to one embodiment;
FIG. 11 is a view showing a mold provided with an absorption hole according to one embodiment; and
FIG. 12 is a view showing a configuration in which a reinforcement sheet is seated in the mold according to one embodiment.

Reference will now be made in detail to a packing buffer and a manufacturing method thereof according to one embodiment, examples of which are illustrated in the accompanying drawings, wherein like reference numerals refer to like elements throughout.

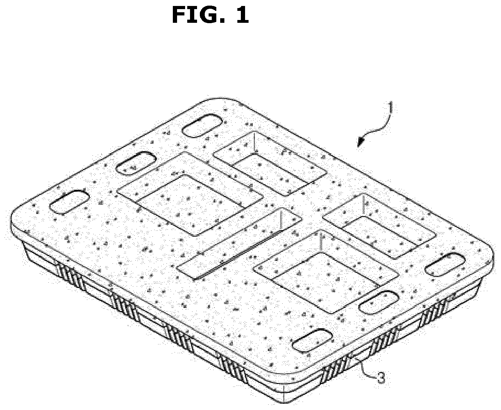

FIG. 1 is a perspective view showing a packing buffer according to one embodiment.

Referring to FIG. 1, the packing buffer 1 according to one embodiment is integrally injection molded with a reinforcement sheet 3 via insert molding of the reinforcement sheet 3. The reinforcement sheet 3 may be provided on at least one side of the packing buffer 1 for increase in strength. The packing buffer 1 may be formed of a soft cushioning material, such as Styrofoam, to protect a product packed therein from external shock and to prevent damage to an outer surface of the product. In this case, since the packing buffer 1 may have relatively low strength, the packing buffer 1 may be damaged by a band surrounding the outer surface of the packing buffer 1 or by the weight of a product in the course of packing the product. Therefore, to increase the strength of the packing buffer 1, the reinforcement sheet 3, which is formed of a hard material, may be mounted at a specific region of the outer surface or inner surface of the packing buffer 1 where a high pressure will be applied.

The packing buffer 1 and the reinforcement sheet 3 may be formed of the same material. The packing buffer 1 and the reinforcement sheet 3 may be formed of polystyrene, polyurethane, or the like. For example, the packing buffer 1 and the reinforcement sheet 3 may be formed of expanded poly propylene (EPP) or expanded poly styrene (EPS). The reinforcement sheet 3 may be formed of the same material as the packing buffer 1 and may have greater rigidity than the packing buffer 1. As the packing buffer 1 and the reinforcement sheet 3 are formed of a single material, the packing buffer 1 may be easily recycled without requiring separation of the reinforcement 3 from the packing buffer 1.

The packing buffer 1 formed by insert molding may be manufactured by locating the reinforcement sheet 3 within a mold, injecting a granular material, such as EPP, EPS, or the like, into a molding space defined in the mold, and applying heat and pressure to the injected material. More particularly, the packing buffer 1 formed by insert molding may be manufactured by inserting the reinforcement sheet 3 into one of a pair of molds and applying heat and pressure after coupling the molds to each other. After the material charged in the molding space defined between the pair of molds is fused upon receiving heat and pressure, the material may be solidified via cooling of the molds. Once the material within the molds is solidified to some extent, the molds are opened to release the packing buffer 1 as a solid molded article. In this way, the packing buffer 1 may be manufactured by insert molding.

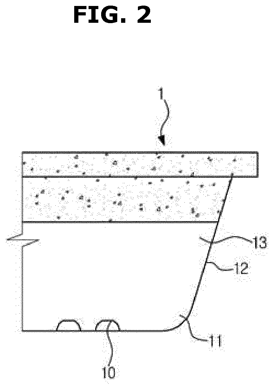

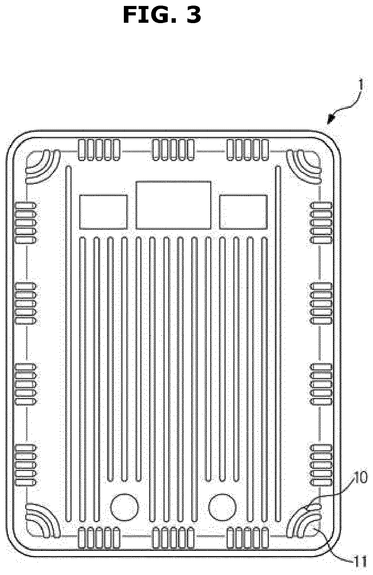

FIG. 2 is a partial side view of the packing buffer according to the embodiment, and FIG. 3 is a bottom view of the packing buffer according to the embodiment.

Referring to FIG. 2, recesses 10 may be indented in an outer surface of the packing buffer 1. The recesses 10 may be indented in a lower surface or lateral surface of the packing buffer 1. Providing the outer surface of the packing buffer 1 with the recesses 10 may increase strength of the reinforcement sheet 3 provided in the packing buffer 1. In particular, in the case of a large packing buffer 1 for packing of a bulky product, the packing buffer 1 may be provided at the outer surface thereof with the recesses 10 for increase in strength of the packing buffer 1 as well as the reinforcement sheet 3, which may prevent the packing buffer 1 from being damaged by external friction.

Referring to FIG. 3, each corner 11 of the packing buffer 1 may be rounded. This may prevent the corner 11 of the packing buffer 11 from being easily damaged by external friction. A lateral surface 12 of the packing buffer 1 may have a gradient. The lateral surface 12 of the packing buffer 1 having a gradient may facilitate easy release of the completely molded packing buffer 1 from the molds. In addition, a cavity 101 that will be described hereinafter may have a rounded corner corresponding to the shape of the packing buffer 1 and a sloped lateral contour, which may facilitate efficient seating of the reinforcement sheet 3 in the cavity 101.

Hereinafter, a method of manufacturing a packing buffer using molds according to one embodiment will be described in detail.

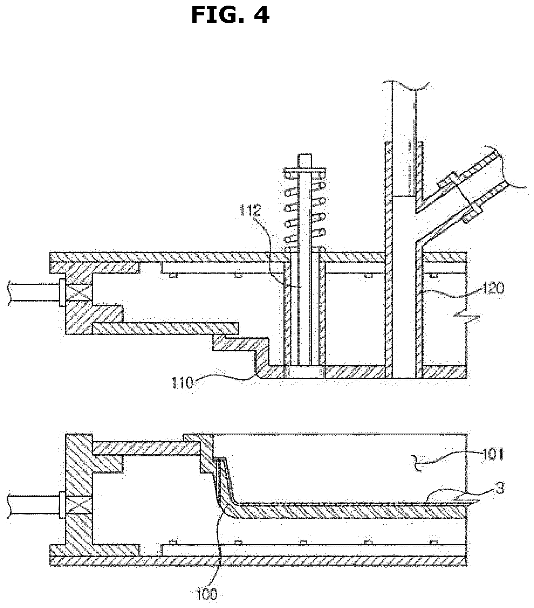

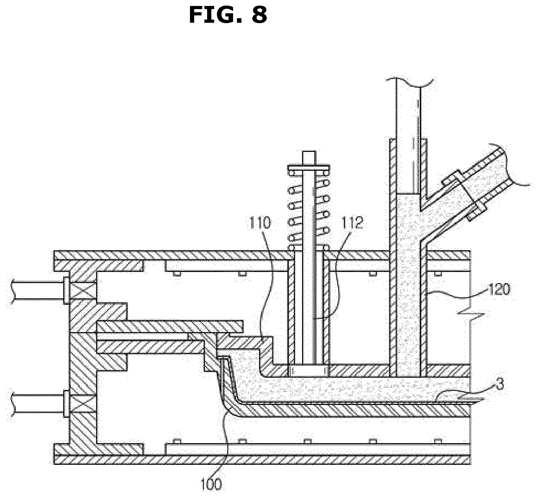

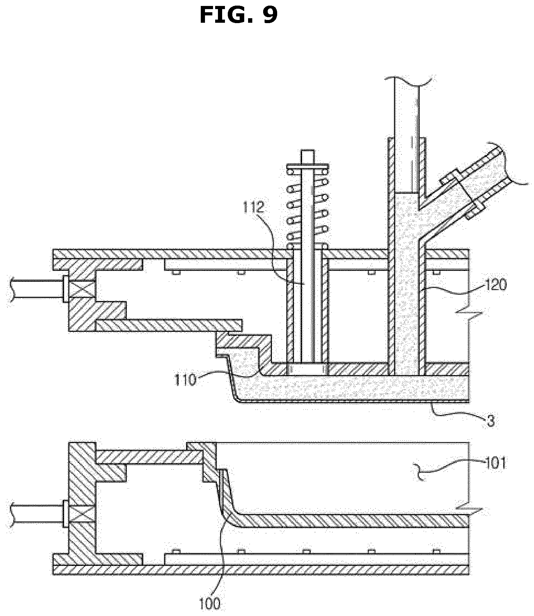

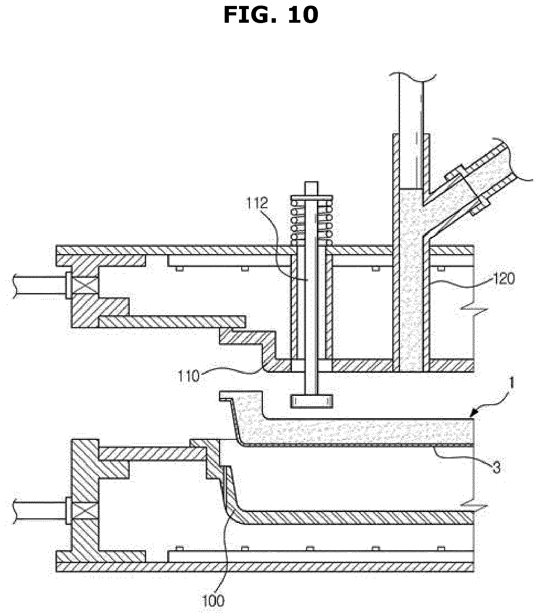

FIGS. 4 to 10 are views showing a method of manufacturing a packing buffer according to one embodiment.

Referring to FIGS. 4 to 10, molds for manufacture of a packing buffer according to one embodiment include a cavity mold frame 100 and a core mold frame 110.

The cavity 101 that is a molding space of the packing buffer 1 is defined in the cavity mold frame 100. The cavity 101 may have a shape corresponding to the shape of the packing buffer 1. An inner surface of the cavity mold frame 100 defining the cavity 101 may be provided with bosses corresponding to the recesses 10 of the packing buffer 1. In addition, the inner surface of the cavity mold frame 100 defining the cavity 101 may have a rounded corner or may have a gradient to correspond to the packing buffer 1.

The cavity mold frame 100 may include a pipe (not shown) through which cold air for cooling the cavity mold frame 100 or steam for heating the cavity mold frame 100 may be supplied.

The core mold frame 110 may be disposed above the cavity mold frame 100. The core mold frame 110 may be selectively attached to or detached from the cavity mold frame 100. A lower surface of the core mold frame 110 may have a shape corresponding to one surface of the packing buffer 1. For example, the cavity mold frame 100 may form a lower surface and lateral surface of the packing buffer 1, and the lower surface of the core mold frame 110 may form an upper surface of the packing buffer 1. The core mold frame 100 may include a pipe (not shown) through which cold air for cooling the core mold frame 110 or steam for heating the core mold frame 100 may be supplied.

The core mold frame 110 may include a material injection pipe 120 through which a material of the packing buffer 1 may be injected. The material of the packing buffer 1 may be charged into the cavity 101 through the material injection pipe 120. The core mold frame 110 may further include a release member 112 to release the molded packing buffer 1. The packing buffer 1, solidified in the cavity 101, may be separated and released from the mold by the release member 112.

To mold the packing buffer 1 provided with the reinforcement sheet 3, as exemplarily shown in FIG. 4, the reinforcement sheet 3 may be inserted into the cavity 101 defined in the cavity mold frame 100 in a state in which the cavity mold frame 100 and the core mold frame 110 are separated from each other. In one example, the reinforcement sheet 3 may be formed of polypropylene.

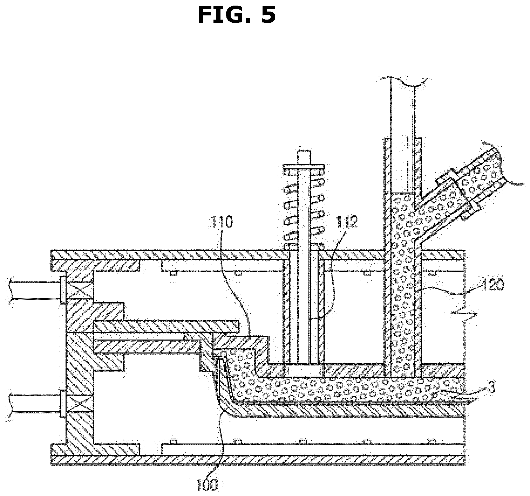

After the reinforcement sheet 3 is located in the cavity mold frame 100, as exemplarily shown in FIG. 5, the cavity mold frame 100 and the core mold frame 110 may be temporarily coupled to each other. Once the cavity mold frame 100 and the core mold frame 110 are coupled to each other, a material of the packing buffer 1 may be charged into the cavity 101 through the material injection pipe 120. The material charged into the cavity 101 through the material injection pipe 120 may be equal to the material of the reinforcement sheet 3. In one example, the material charged into the cavity 101 may be polypropylene.

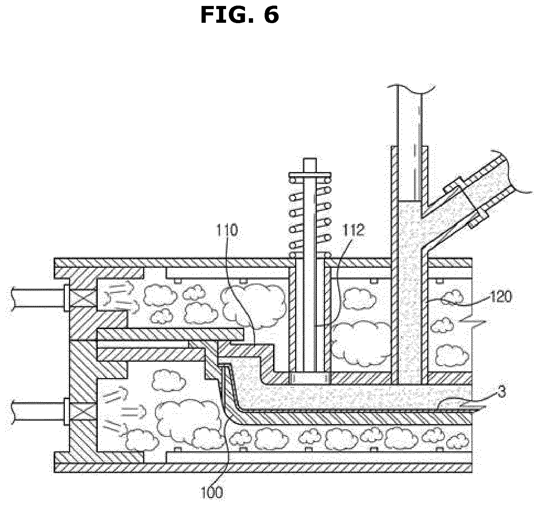

As exemplarily shown in FIG. 6, after the cavity 101 is charged with the material, the cavity mold frame 100 and the core mold frame 110 may be completely coupled to each other, and heat and pressure may be applied to the cavity 101. Once the cavity mold frame 100 and the core mold frame 110 are completely coupled to each other, high-temperature steam may be supplied through the pipes (not shown) connected respectively to the cavity mold frame 110 and the core mold frame 110. The material within the cavity 101 may be fused by the high-temperature steam.

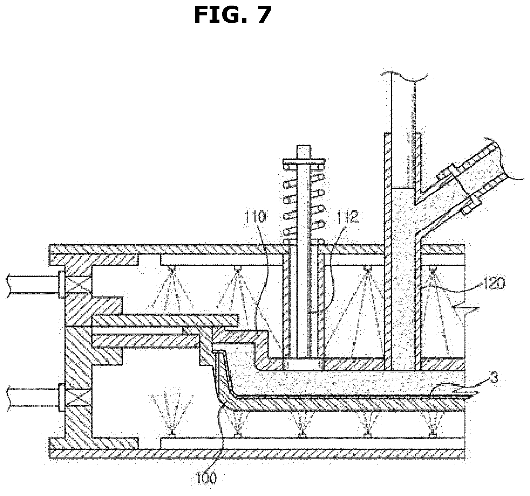

As exemplarily shown in FIG. 7, after the material within the cavity 101 is fused, the material within the cavity 101 may be subjected to cooling. If the material within the cavity 101 is fused into the shape corresponding to the cavity 101, cold water may be supplied through the pipes (not shown) connected respectively to the cavity mold frame 100 and the core mold frame 110. Through supply of the cold water, the material within the cavity 101 may be cooled and solidified simultaneously with cooling of the cavity mold frame 100 and the core mold frame 110. In this case, the reinforcement sheet included in the packing buffer 1 may be cooled to thereby be integrally formed with the packing buffer 1.

After completion of cooling using the cold water, the cavity mold frame 110 and the core mold frame 110 may be further cooled under a vacuum state. As such, the packing buffer 1 may be solidified into a shape corresponding to a space defined by the cavity 101 of the cavity mold frame 100 and the lower surface of the core mold frame 110. After completion of cooling, the cavity mold frame 100 and the core mold frame 110 may be spaced apart from each other to open the cavity 101. Once the cavity mold frame 100 and the core mold frame 110 are spaced apart from each other, the packing buffer 1 may be released by the release member 112 provided at the core mold frame 110. In this way, the packing buffer 1 equipped with the reinforcement sheet 3 may be manufactured.

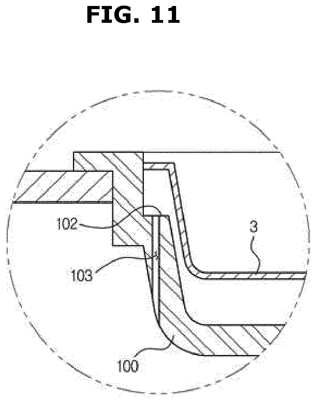

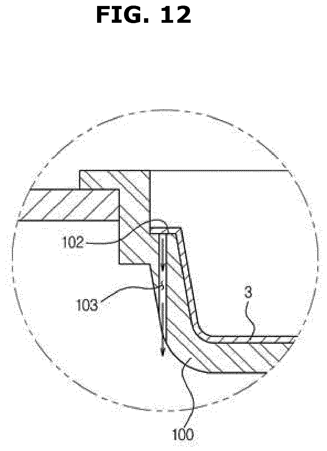

FIG. 11 is a view showing a mold provided with an absorption hole according to one embodiment, and FIG. 12 is a view showing a configuration in which the reinforcement sheet is seated in the mold according to one embodiment.

Referring to FIGS. 11 and 12, the mold according to one embodiment may have an absorption hole 103. More particularly, the cavity mold frame 100 according to one embodiment of may be provided at one side thereof with a plurality of absorption holes 103. In one example, the absorption holes 103 may be formed in one surface of a flange portion 102 formed at a sidewall defining the cavity 101. The absorption holes 103 may be formed in the inner surface of the cavity mold frame 100 defining the cavity 101 on which the reinforcement sheet 3 is seated. The reinforcement sheet 3 may be larger than the inner surface of the cavity 101, such that a portion of the reinforcement sheet 3 protruding outward from the cavity 101 is seated on the flange portion 102. Provision of the flange portion 102 may ensure that the reinforcement sheet 3 is smoothly seated in the cavity 101 to achieve injection molding without a gap between the packing buffer 1 and the reinforcement sheet 3.

Once the reinforcement sheet 3 is seated on the inner surface of the cavity 101, the reinforcement sheet 3 seated in the cavity 101 is fixed by air suctioned through the absorption holes 103. As such, the reinforcement sheet 3 may be stably seated in the cavity 101. As the reinforcement sheet 3 is stably seated and fixed in the cavity 101, any expensive device to fix the reinforcement sheet 3 is unnecessary, which may cause a reduction of the manufacturing costs. In addition, as injection molding is implemented in a fixed state of the reinforcement sheet 3, the reinforcement sheet 3 may be uniformly formed on the surface of the packing buffer 1. As such, the packing buffer 1 may be manufactured to exhibit relatively uniform surface strength, rather than exhibiting high or low surface strength at a specific portion thereof. This may result in enhancement in the quality of the packing buffer 1.

As described above, according to the embodiment, the reinforcement sheet 3 is integrally injection molded with the packing buffer 1, resulting in enhanced strength of the packing buffer 1. The packing buffer may be manufactured by a reduced number of manufacturing processes as compared to a conventional manufacturing method in which the packing buffer is first injection molded and then the reinforcement sheet is attached to the packing buffer, which may result in enhanced manufacturing efficiency as well as reduced manufacturing costs owing to elimination of an additional adhesive member. That is, the packing buffer 1 may achieve reduction in investment costs for manufacturing facilities because an additional device to bond the reinforcement sheet 3 to the packing buffer 1 is unnecessary. Moreover, since the reinforcement sheet 3 and the packing buffer 1 are injection molded using the same material, the used packing buffer 1 may be recycled without separation of the reinforcement sheet 3 and thus may be considered as an eco-friendly product. The packing buffer 1 has a sloped lateral surface having a gradient and a rounded corner, thereby being manufactured with high manufacturing efficiency, and the surface of the packing buffer 1 may be provided with recesses for increase in strength of the packing buffer 1.

As is apparent from the above description, according to one embodiment, a packing buffer having reduced manufacturing costs and high manufacture efficiency may be accomplished. In addition, it may be possible to accomplish easy recycling and quality enhancement of the packing buffer.

Although the embodiments have been shown and described, it would be appreciated by those skilled in the art that changes may be made in the embodiment without departing from the principles and spirit of the invention, the scope of which is defined in the claims and their equivalents.

## Claims

1. A method of manufacturing a packing buffer (1), the method comprising:
seating a reinforcement sheet (3) in a cavity (101) defined within a cavity mold frame (100);
fixing the reinforcement sheet seated in the cavity using a vacuum device connected to an absorption hole (103) formed in the cavity mold frame;
coupling a core mold frame (110) and the cavity mold frame to each other;
injecting a material of the packing buffer into the cavity;
applying heat and pressure to the cavity;
cooling the cavity; and
releasing the packing buffer integrally injection-molded with the reinforcement sheet.

2. The method according to claim 1, wherein the same material as that of the reinforcement sheet is injected into the cavity.

3. The method according to claim 2, wherein polypropylene is injected into the cavity.

4. The method according to claim 1, 2, or 3, wherein the material of the packing buffer is injected into the cavity after the cavity mold frame and the core mold frame are temporarily coupled to each other, and the cavity mold frame and the core mold frame are completely coupled to each other after the material of the packing buffer is charged into the cavity.

5. The method according to any one of the preceding claims, further comprising providing the packing buffer with recesses (10) at an outer surface thereof.

6. The method according to claim 5, wherein the recesses are indented in the surface where the reinforcement sheet is formed.

7. The method according to any one of the preceding claims, further comprising forming the packing buffer with a rounded corner (11).

8. The method according to any one of the preceding claims, comprising locating the reinforcement sheet at a lower surface and a lateral surface of the packing buffer.

9. The method according to any one of the preceding claims, comprising forming a gradient in a lateral surface of the packing buffer.

## Patentansprüche

1. Verfahren zur Herstellung eines Verpackungspuffers (1), wobei das Verfahren Folgendes beinhaltet:
Einsetzen einer Verstärkungsplatte (3) in eine Kavität (101), die in einem Kavitätsformrahmen (100) definiert ist;
Fixieren der in der Kavität sitzenden Verstärkungsplatte mit einer Vakuumvorrichtung, die mit einem im Kavitätsformrahmen ausgebildeten Absorptionsloch (103) verbunden ist;
Koppeln eines Kernformrahmens (110) und des Kavitätsformrahmens miteinander;
Injizieren eines Materials des Verpackungspuffers in die Kavität;
Applizieren von Wärme und Druck auf die Kavität;
Kühlen der Kavität; und
Lösen des Verpackungspuffers, der einstückig mit der Verstärkungsplatte spritzgeformt ist.

2. Verfahren nach Anspruch 1, wobei dasselbe Material wie das der Verstärkungsplatte in die Kavität injiziert wird.

3. Verfahren nach Anspruch 2, wobei Polypropylen in die Kavität injiziert wird.

4. Verfahren nach Anspruch 1, 2 oder 3, wobei das Material des Verpackungspuffers in die Kavität injiziert wird, nachdem der Kavitätsformrahmen und der Kernformrahmen vorübergehend miteinander gekoppelt wurden, und der Kavitätsformrahmen und der Kernformrahmen vollständig miteinander gekoppelt sind, wenn das Material des Verpackungspuffers in die Kavität geladen ist.

5. Verfahren nach einem der vorherigen Ansprüche, das ferner das Versehen des Verpackungspuffers mit Aussparungen (10) an einer Außenfläche davon beinhaltet.

6. Verfahren nach Anspruch 5, wobei die Aussparungen in die Oberfläche eingedrückt sind, wo die Verstärkungsplatte ausgebildet ist.

7. Verfahren nach einem der vorherigen Ansprüche, das ferner das Bilden des Verpackungspuffers mit einer abgerundeten Ecke (11) beinhaltet.

8. Verfahren nach einem der vorherigen Ansprüche, das das Positionieren der Verstärkungsplatte an einer unteren Fläche und einer seitlichen Fläche des Verpackungspuffers beinhaltet.

9. Verfahren nach einem der vorherigen Ansprüche, das das Ausbilden eines Gradienten in einer seitlichen Fläche des Verpackungspuffers beinhaltet.

## Revendications

1. Procédé de fabrication d'un article de calage d'emballage (1), le procédé comportant les étapes consistant à :
placer une feuille de renfort (3) dans une cavité (101) définie à l'intérieur d'une carcasse de moule formant cavité (100) ;
fixer la feuille de renfort placée dans la cavité au moyen d'un dispositif à vide connecté à un trou d'absorption (103) formé dans la carcasse de moule formant cavité ;
accoupler une carcasse de moule formant noyau (110) et la carcasse de moule formant cavité l'une par rapport à l'autre ;
injecter un matériau de l'article de calage d'emballage à l'intérieur de la cavité ;
appliquer de la chaleur et de la pression au niveau de la cavité ;
refroidir la cavité ; et
libérer l'article de calage d'emballage intégralement moulé par injection avec la feuille de renfort.

2. Procédé selon la revendication 1, dans lequel le même matériau que celui de la feuille de renfort est injecté à l'intérieur de la cavité.

3. Procédé selon la revendication 2, dans lequel du polypropylène est injecté à l'intérieur de la cavité.

4. Procédé selon la revendication 1, la revendication 2, ou la revendication 3, dans lequel le matériau de l'article de calage d'emballage est injecté à l'intérieur de la cavité après l'accouplage provisoire de la carcasse de moule formant cavité et de la carcasse de moule formant noyau l'une par rapport à l'autre, et la carcasse de moule formant cavité et la carcasse de moule formant noyau sont entièrement accouplées l'une par rapport à l'autre après le chargement du matériau de l'article de calage d'emballage à l'intérieur de la cavité.

5. Procédé selon l'une quelconque des revendications précédentes, comportant par ailleurs l'étape consistant à fournir à l'article de calage d'emballage des évidements (10) au niveau d'une surface extérieure de celui-ci.

6. Procédé selon la revendication 5, dans lequel les évidements sont gaufrés dans la surface où la feuille de renfort est formée.

7. Procédé selon l'une quelconque des revendications précédentes, comportant par ailleurs l'étape consistant à former l'article de calage d'emballage avec un angle arrondi (11).

8. Procédé selon l'une quelconque des revendications précédentes, comportant l'étape consistant à positionner la feuille de renfort au niveau d'une surface inférieure et d'une surface latérale de l'article de calage d'emballage.

9. Procédé selon l'une quelconque des revendications précédentes, comportant l'étape consistant à former un gradient dans une surface latérale de l'article de calage d'emballage.
